# EUROPÄISCHE PATENTSCHRIFT

(11) **EP 0 455 194 B1**
(45) Veröffentlichungstag und Bekanntmachung des Hinweises auf die Patenterteilung: **01.03.1995**
(21) Anmeldenummer: 91106921.9
(22) Anmeldetag: 29.04.1991
(51) Int. Cl.: C09B 41/00, C09B 35/08, C09D 17/00

(54) **Verfahren zur Herstellung eines Disazopigmentes**
Method of preparing a disazo pigment
Procédé de préparation d'un pigment disazoique

(30) Priorität: 02.05.1990 DE 4014022
(43) Veröffentlichungstag der Anmeldung: 06.11.1991
(73) Patentinhaber: HOECHST AKTIENGESELLSCHAFT, 65926 Frankfurt am Main (DE)
(72) Erfinder: Rieper, Wolfgang, W-6000 Frankfurt am Main 1 (DE)

## Beschreibung

Die vorliegende Erfindung bezieht sich auf die Herstellung von C.I. Pigment Yellow 81 (No. 21127) mit besonders geringem PCB-Gehalt.

Disazopigmente auf Basis von Tetrachlor-diaminobiphenyl-Verbindungen können gewisse Anteile von polychlorierten Biphenylen (PCB) als Verunreinigungen enthalten (W. Herbst und K. Hunger in "Industrielle Organische Pigmente", VCH-Verlag, Weinheim 1987, S. 578). Dies betrifft vor allem die nach üblichen großtechnischen Verfahren hergestellten Pigmente dieses Typs, deren PCB-Gehalte häufig die in Handelsprodukten gesetzlich zugebilligten Grenzwerte überschreiten. So ist beispielsweise der nach den Richtlinien in den USA zulässige Gehalt polychlorierter Biphenyle auf maximal 25 Mikrogramm pro Gramm Pigment festgelegt.

Aus dem erwähnten Anlaß sind verbesserte Synthesetechniken für hochreine Azopigmente entwickelt worden:
In der veröffentlichten europäischen Patentanmeldung EP-A-0 319 452 werden somit von Di- und Trichloranilinen hergeleitete Monoazopigmente mit einem äußerst geringen Gehalt (maximal 25 µg/g) an polychlorierten Biphenylen und Verfahren zu deren Herstellung erläutert. Die auf diesen speziellen Fall ausgerichteten, im Zuge der Pigmenterzeugung zu beachtenden Kupplungsparameter betreffen vor allem zulässige molare Überschüsse an Diazoniumsalz, bezogen auf die Summe der Molzahlen von der im Reaktionsgemisch vorhandenen Kupplungskomponente und bereits entstandenem Pigment, wobei die Grenzbereiche für den Diazoniumsalzüberschuß durch den pH der Kupplungsreaktion bestimmt werden. Als weiterhin obligatorisch für diese Synthesevorschrift wird ein pH-Bereich unterhalb 7, eine obere Grenze der jeweiligen Kupplungstemperatur von 50°C sowie ein strenger Ausschluß von Nitritionen während der Kupplungsreaktion definiert, wobei zusätzlich noch eine Beschränkung der Methode auf bloß zwei der sonst üblichen Kupplungsvarianten gilt, bei denen entweder die Zugabe der Diazoniumsalzlösung zur Suspension oder Lösung der Kupplungskomponente stattfindet oder aber ein gleichzeitiges Zusammenführen der Lösungen bzw. Suspensionen beider Reaktionspartner.

Die prioritätsältere nachveröffentlichte WO 90/ 15844 beschreibt ein Verfahren zur Herstellung PCB-armer Azopgimente, wobei durch Zusatz von wasserlöslichen Olefinen bei der Azokupplung die PCB-bildenden Nebenreaktionen während der Pigment-Synthese zurückgedrängt werden.

Die Herstellung von hochreinen Mono- oder Disazopigmenten gelingt erfahrungsgemäß weder nach der sogenannten "indirekten" Kupplung, bei welcher der Zulauf der alkalischen Lösung der Kupplungskomponente zur vorgelegten Diazoniumsalz-Lösung oder -Suspension erfolgt, noch nach dem Verfahren der sogenannten "Pendelkupplung", bei dem durch kontinuierliches oder diskontinuierliches Eintragen von Lauge (meist verdünnter Natronlauge) in das Umsetzungsgemisch der geforderte pH-Bereich der Kupplungsreaktion aufrecht erhalten wird.

Gerade jedoch die letztgenannte Variante der Pendelkupplung wird bei der großtechnischen Herstellung von Azopigmenten häufig praktiziert, vor allem dann, wenn hohe Säureüberschüsse (etwa bei der Diazotierung schwach basischer Amine oder Diamine) zur Einstellung eines für die Kupplungsreaktion günstigen pH-Bereichs neutralisiert werden müssen. Durch Zudosierung von Lauge während der Azokupplung können die sonst notwendigen erheblichen Puffermengen eingespart werden.

Es zeigte sich nun, daß bei der Herstellung des Kupplungsproduktes von bisdiazotiertem 2,2',5,5'-Tetrachlor-4,4'-diamino-biphenyl auf zwei Äquivalente N-Acetoacetyl-2,4-dimethylanilid trotz sorgfältiger Beachtung der in der EP-A-0 319 452 definierten Reaktionsparameter ein Disazopigment erhalten wird, dessen Gehalt an PCB nicht den strengsten gesetzlichen Auflagen genügt (d.h. maximal 25 µg/g PCB im Produkt). Vor allem nach dem bevorzugt praktizierten Pendelkupplungsprinzip für das genannte Gelbpigment liegen dessen Verunreinigungen an polychlorierten Biphenylen oft über 100 µg/g Pigment.

Es war deshalb besonders wünschenswert, ein großtechnisch praktikables Syntheseverfahren für C.I. Pigment Yellow 81 durch Azokupplung zu entwickeln, bei dem die Entstehung von PCB weitgehend ausgeschlossen ist, in jedem Falle auf das Niveau von nicht mehr als 25 µg/g zurückgedrängt werden kann.

Gegenstand der vorliegenden Erfindung ist nunmehr ein Verfahren zur Herstellung von C.I. Pigment Yellow 81 mit der C.I. No. 21127 (CAS-Nr. 22094-93-5), das einen Gehalt von höchstens 25 µg an polychlorierten Biphenylen mit mindestens 4 Chloratomen (PCB) pro Gramm Pigment aufweist, wobei die Azokupplung in wäßrigem Medium bei einem pH-Wert oder innerhalb eines pH-Bereiches von weniger als pH 7, bevorzugt zwischen pH 3,0 und 6,0, entweder durch Zugabe der Diazoniumsalzlösung zu einer Suspension der Kupplungskomponente oder durch gleichzeitiges Zudosieren der beiden Reaktionspartner (Pigmentbildungskomponenten) in ein Umsetzungsgefäß herbeigeführt wird, dadurch gekennzeichnet, daß man die Kupplungsoperation in Gegenwart eines quartären Ammoniumsalzes der allgemeinen formelmäßigen Struktur I 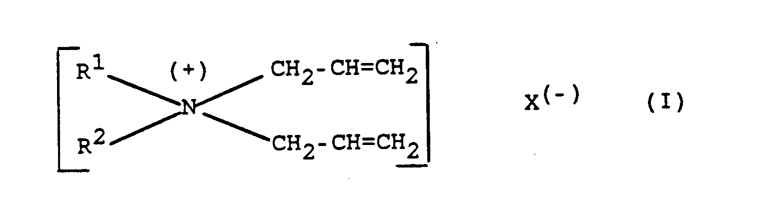
worin R¹ und R² unabhängig voneinander jeweils C₁-C₃-Alkylgruppen bedeuten, und X für Chlor, Brom und Jod steht, insbesondere in Anwesenheit von Dimethyl-diallyl-ammoniumchlorid vornimmt.

Die jeweiligen Mengen der erfindungsgemäß einzusetzenden quartären Ammoniumsalze der Formel I bewegen sich zwischen 1 und 10 Gew.-%, vorzugsweise von 2 bis 5 Gew.-%, bezogen auf die Menge des bei der Umsetzung gebildeten Gelbpigmentes. Der Zusatz der Ammoniumverbindung erfolgt zweckmäßigerweise vor, während oder nach der Herstellung der Suspension der Kupplungskomponente, das Quartärsalz kann aber auch der Diazoniumsalzlösung oder dem Hydrochlorid des Ausgangsstoffes Tetrachlorbenzidin vor dessen Bisdiazotierung beigefügt werden. Ein Einsatz weiterer Hilfsmittel bei der Azokupplung ist nicht erforderlich, da das erfindungsgemäß verwendete Quartärsalz bereits ausreichende oberflächenaktive Wirkung zeigt.

Der PCB-senkende Einfluß der Diallyl-dialkyl-ammoniumverbindung gemäß der Formel I bei der Herstellung von C.I. Pigment Yellow 81 ist überraschend und war nicht vorhersehbar: Üblicherweise bei der Kupplung des Pigmentes eingesetzte nichtionogene Tenside (wie etwa das Einwirkungsprodukt von Ethylenoxid auf Oleylalkohol; deutsche Patentschrift DE-C-1 088 634 vgl. das Ausführungsbeispiel) führen zu Kupplungsprodukten mit PCB-Gehalten um 100 µg/g und mehr. Auch bei Verwendung anionaktiver Tenside (wie etwa Alkansulfonate) läßt sich der PCB-Spiegel des Pigmentes nicht wesentlich erniedrigen. Selbst Tetraalkylammoniumsalze mit derselben Kohlenstoffanzahl wie das erfindungsgemäß eingesetzte Dimethyl-diallyl-ammoniumchlorid der Formel I (z.B. Tetraethyl-ammoniumbromid oder Dimethyl-dipropyl-ammoniumchlorid) haben eine deutlich geringere Wirkung auf die Senkung des Gehaltes an polychlorierten Biphenylen im Pigment.

Von besonderer Bedeutung für die Praxis ist die Tatsache, daß der positive Einfluß der Diallylverbindungen gemäß Formel I auf die Reduzierung des PCB-Spiegels im C.I. Pigment Yellow 81 auch dann wirksam ist, wenn bei der technischen Herstellung des Disazopigmentes - unter Verzicht auf abwasserbelastende hohe Pufferzusätze - der pH-Wert der Kupplungsreaktion nach dem geschilderten Verfahren der Pendelkupplung geregelt wird.

Die oben sowie aus den Beispielen ersichtlichen Angaben über die PCB-Gehalte der jeweiligen Pigmentproben basieren auf einer Analysenmethode zur quantitativen Erfassung von PCB-Verunreinigungen, und zwar einschließlich der okklusiv und adsorptiv an das Pigment gebundenen Anteile. Dabei wird eine Probe des zu analysierenden Pigmentes in konzentrierter Schwefelsäure gelöst, und die chlorierten Biphenyle werden dann in einem kombinierten Extraktions-/Reinigungs-Verfahren (etwa durch Chromatographie) in ein unpolares Lösungsmittel wie aliphatische Kohlenwasserstoffe, insbesondere n-Hexan, übergeführt. In der erhaltenen organischen Lösung wird der PCB-Gehalt anschließend nach bekannten Methoden, z.B. gaschromatographisch, quantitativ bestimmt, wie es z.B. am Ende des Beispiels 1 näher ausgeführt wird.

Das nach dem erfindungsgemäßen Verfahren hergestellte gelbe Azopigment kann für die Colorierung von natürlichen und synthetischen Materialien verwendet werden.

Insbesondere eignet es sich zum Pigmentieren von Druckfarben für den Buch/Offsetdruck, Tiefdruck, Flexodruck und andere spezielle Druckverfahren, zur Herstellung pigmentierter Lacke auf Basis oxidativ trocknender oder ofentrocknender Systeme, zur Herstellung von Dispersionsfarben, zum Pigmentieren von Kunststoffen wie beispielsweise Polyvinylchlorid, Polyolefine, Polystyrole und deren Copolymerisate, Polymethylmethacrylate, Polyurethane, Polycarbonate, Polyester, Cellulosederivate, Elastomere oder Duroplaste, sowie als Farbmittel für die Spinnfärbung. Das Gelbpigment kann auch für spezielle Applikationsgebiete eingesetzt werden, etwa als Farbmittel für elektrophotgraphische Toner, für Farbstrahldruckverfahren (z.B. Ink-Jet-Verfahren) oder Thermotransferbänder.

In den folgenden Beispielen beziehen sich Teile und Prozentangaben auf das Gewicht, sofern nichts anderes angezeigt ist. Volumenteile verhalten sich zu Gewichtsteilen wie Liter zu kg.

### Beispiel 1

32,2 Teile 2,2',5,5'-Tetrachlor-4,4'-diamino-biphenyl werden 8 Stunden lang in einem Gemisch aus 85 Vol.-Teilen Wasser und 85 Vol.-Teilen 30 %iger Salzsäure gerührt. Das hierbei gebildete Diamin-hydrochlorid diazotiert man sodann bei 0-10°C durch Zutropfen von 27 Vol.-Teilen einer 40 %igen wäßrigen Natriumnitritlösung. Nach vollständiger Diazotierung wird die resultierende Bisdiazoniumsalzlösung durch Auffüllen mit Wasser auf 400 Vol.-Teile verdünnt, unter Zusatz von Kieselgur filtriert und ein im Filtrat eventuell vorhandener Überschuß an salpetriger Säure wird mittels Amidosulfonsäure zerstört.

In einem zweiten Gefäß werden 42 Teile Acetessigsäure-2,4-dimethyl-anilid in 600 Vol.-Teilen Wasser angerührt und durch Versetzen mit 20 Vol.-Teilen 33 %iger Natronlauge gelöst. Die erhaltene klare Lösung kühlt man nun auf 10°C ab, fügt 3,5 Teile einer 60 %igen wäßrigen Lösung von Dimethyl-diallyl-ammoniumchlorid hinzu und bringt die Kupplungskomponente anschließend unter Rühren durch rasche Zugabe von 14 Vol.-Teilen Eisessig zur Ausfällung.

Die Kupplung selbst erfolgt durch Zudosieren der obigen Bisdiazoniumsalzlösung in die vorgelegte Suspension der Kupplungskomponente innerhalb von 2 bis 2,5 Stunden bei 15-20°C. Sobald der pH-Wert der Reaktionsmischung von anfangs 5,6 bis 5,4 auf pH 4,0 bis 3,8 gesunken ist (d.i. nach etwa 30 bis 40 Minuten), beginnt man mit dem Zutropfen von 6 %iger Natronlauge, um den pH-Wert während der Reaktion bei 3,8 zu halten. Nach beendetem Zulauf der Diazoniumsalzlösung und sobald durch Tüpfelproben mit H-Säure keine Diazoniumionen mehr nachweisbar sind, erhitzt man das Umsetzungsgemisch kurz auf 95°C, filtriert dann das ausgefallene Azopigment ab, wäscht es mit Hilfe von Wasser salzfrei und trocknet es bei 60°C.

Zur analytischen Bestimmung des Gehaltes an polychlorierten Biphenylen wird eine Pulverprobe des so erhaltenen Kupplungsproduktes C.I. Pigment Yellow 81 (Nr. 21127) zunächst mit einer Standardlösung zweier bekannter chlorierter Biphenyle dotiert, in etwa 96 %iger Schwefelsäure gelöst und die resultierende Lösung wird in dem nachfolgend beschriebenen, kombinierten Extraktions-/Reinigungs-Verfahren mit soviel Kieselgel vermischt, daß dieses noch rieselfähig bleibt. Diese Mischung (aus Adsorbens samt Prüfsubstanz) wird nun in ein übliches Chromatographie-Rohr übergeführt, das man bereits zuvor mit zwei unterschiedlich vorbehandelten Kieselgel-Reinigungszonen beschickt hatte (eine mit KOH beladene Kieselgelschicht über einer mit Oleum beladenen Kieselgelschicht), und anschließend mit n-Hexan eluiert. Im Eluat werden die polychlorierten Biphenyle nach gaschromatographischer Trennung an einer Kapillarsäule durch Elektronenfang (electron capture detection = ECD) oder massenselektive Detektion dann gegen einen inneren PCB-Standard quantitativ bestimmt.

Die dabei ermittelten Mengenanteile an PCB betrugen 20 µg, bezogen auf 1 g Pigment (20 ppm PCB).

Die Quantifizierung der Probe kann auch nach anderen analytischen Methoden, etwa durch Hochdruckflüssigkeitschromatographie (HPLC) vorgenommen werden.

### Beispiel 2 (Vergleichstest)

Führte man die in Beispiel 1 beschriebene Kupplung zur Disazoverbindung C.I. Pigment Yellow 81 in Abwesenheit des dort verwendeten Dimethyl-diallyl-ammoniumchlorids durch und setzte stattdessen bei der Fällung der Kupplungskomponente als Hilfsmittel 25 Vol.-Teile einer 10 %igen wäßrigen Lösung des Kondensationsproduktes von Oleylalkohol mit 20 Äquivalenten Ethylenoxid ein, so wies das hier entstandene Kupplungsprodukt einen Gehalt an polychlorierten Biphenylen von 107 µg/g (107 ppm) auf.

### Beispiel 3 (Vergleichstest)

Bei Verwendung eines sekundären Alkansulfonats (C-Kettenlänge ca. 60 % C₁₃-C₁₅ und 40 % C₁₆-C₁₇) als Hilfsmittel bei der Kupplung anstelle des in Beispiel 2 beschriebenen nichtionogenen Tensids fiel das C.I. Pigment Yellow 81 mit 78 µg/g PCB-Gehalt an.

### Beispiel 4 und 5 (Vergleichsteste)

Ersetzte man das in Beispiel 1 aufgeführte quartäre Ammoniumsalz entweder durch 3 Teile Tetraethyl-ammoniumbromid oder durch 25 Teile einer 10 %igen wäßrigen Lösung von Dimethyl-dipropyl-ammoniumchlorid und führte die Kupplungen exakt unter den Versuchsparametern des Beispiels 1 durch, so wiesen die erhaltenen Pigmentproben zwischen 45 und 55 µg/g polychlorierte Biphenyle als Verunreinigungen auf.

### Beispiel 6 (Vergleichstest)

32,2 Teile 2,2',5,5'-Tetrachlor-4,4'-diamino-biphenyl wurden wie in Beispiel 1 diazotiert, sowie 42 Teile N-Acetoacetyl-2,4-dimethyl-anilin wie dort angegeben alkalisch gelöst. Nach Zusatz von 30 Vol.-Teilen einer 10 %igen wäßrigen Lösung des Umsetzungsproduktes von Stearylalkohol mit 25 Äquivalenten Ethylenoxid fällte man die Kupplungskomponente mit 14 Vol.-Teilen Eisessig in feinverteilter Form aus.

Die Azokupplung erfolgte wiederum durch Zulauf der Bisdiazoniumsalzlösung zur Suspension des Acetessigsäurearylids, wobei der pH-Wert durch portionsweise Zugabe von ca. 80 Teilen kristallinem Natriumacetat im Bereich von 4,5 bis 4 gehalten wurde. Die Aufarbeitung des Kupplungsproduktes erfolgte analog Beispiel 1. Das nach diesem Verfahren erhaltene Disazopigment wies einen PCB-Gehalt von 96 µg/g auf.

## Patentansprüche

1. Verfahren zur Herstellung von C.I. Pigment Yellow 81 (No. 21127), das einen Gehalt von höchstens 25 µg an polychlorierten Biphenylen (PCB) pro Gramm Pigment aufweist, wobei die Azokupplung in wäßrigem Medium bei einem pH-Wert oder innerhalb eines pH-Bereiches von weniger als pH 7 entweder durch Zugabe der Diazoniumsalzlösung zu einer Suspension der Kupplungskomponente oder durch gleichzeitiges Zudosieren der beiden Reaktionspartner in ein Umsetzungsgefäß herbeigeführt wird, dadurch gekennzeichnet, daß man die Kupplungsoperation in Gegenwart mindestens eines quartären Ammoniumsalzes der allgemeinen formelmäßigen Struktur I 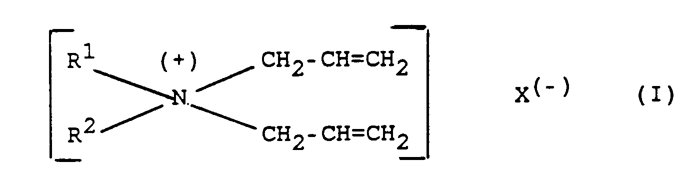 worin R¹ und R² unabhängig voneinander jeweils C₁-C₃-Alkylgruppen bedeuten und X für ein Chlor-, Brom- oder Jodatom steht, vornimmt.

2. Verfahren nach Anspruch 1, dadurch gekennzeichnet, daß als quartäres Ammoniumsalz der Formel I Dimethyl-diallyl-ammoniumchlorid eingesetzt wird.

3. Verfahren nach Anspruch 1 oder 2, dadurch gekennzeichnet, daß das quartäre Ammoniumsalz der Formel I in einer Menge zwischen 1 und 10 Gew.-%, bezogen auf die Menge des bei der Kupplung gebildeten Pigmentes eingesetzt wird.

4. Verfahren nach Anspruch 3, dadurch gekennzeichnet, daß die eingesetzte Menge an quartären Ammoniumsalz 2 bis 5 Gew.-% beträgt.

## Claims

1. A process for preparing C.I. Pigment Yellow 81 (No. 21127) which contains not more than 25 µg of polychlorinated biphenyls (PCBs) per gram of pigment, in which the azo coupling is brought about in aqueous medium at a pH or within a pH range less than pH 7 either by addition of the diazonium salt solution to a suspension of the coupling component or by the simultaneous addition of the two reactants to a reaction vessel, which comprises effecting the coupling operation in the presence of at least one quaternary ammonium salt of the structural formula I 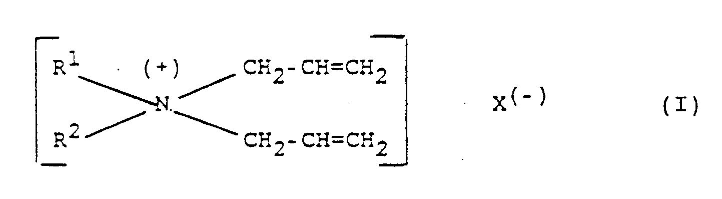 where R¹ and R² are each independently of the other C₁-C₃-alkyl and X is chlorine, bromine or iodine.

2. The process of claim 1, wherein the quaternary ammonium salt of the formula I is dimethyldiallylammonium chloride.

3. The process of claim 1 or 2, wherein the quaternary ammonium salt of the formula I is used in an amount between 1 and 10% by weight, based on the amount of pigment formed in the course of the coupling.

4. The process of claim 3, wherein the amount of quaternary ammonium salt used is from 2 to 5% by weight.

## Revendications

1. Procédé pour la préparation du C.I. pigment jaune 81 (n° 21127) qui présente une teneur en biphényles polychlorés de 25 µg au maximum par gramme de pigment, en mettant en oeuvre la réaction de copulation azoïque en milieu aqueux à une valeur de pH ou dans un domaine de pH inférieur à 7, soit par addition du sel de diazonium à une suspension du composant de copulation, soit par addition progressive simultanée des deux partenaires de réaction dans le réacteur, caractérisé en ce qu'on effectue la réaction de copulation en présence d'au moins un sel d'ammonium quaternaire de structure I répondant à la formule générale 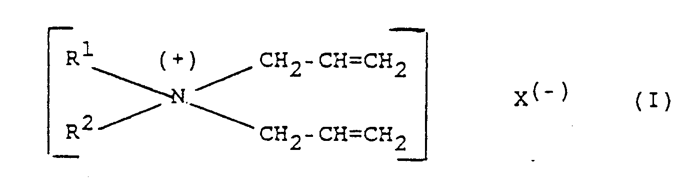 où R₁ et R₂ indépendamment l'un de l'autre représente chacun des groupes alkyle en C₁-C₃ et X représente l'atome de chlore, de fluor ou d'iode.

2. Procédé selon la revendication 1, caractérisé en ce qu'on utilise en tant que sel d'ammonium quaternaire de formule I le chlorure de diméthyl-diallylammonium.

3. Procédé selon la revendication 1 ou 2, caractérisé en ce qu'on utilise le sel d'ammonium quaternaire de formule I dans une quantité comprise entre 1 et 10% en poids par rapport à la quantité de pigment formé lors de la copulation.

4. Procédé selon la revendication 3, caractérisé en ce que la quantité utilisée en sel d'ammonium quaternaire est de 2 à 5% en poids.
